# EUROPÄISCHE PATENTSCHRIFT

(11) **EP 2 605 004 B1**
(45) Veröffentlichungstag und Bekanntmachung des Hinweises auf die Patenterteilung: **22.04.2015**
(21) Anmeldenummer: 12168391.6
(22) Anmeldetag: 16.05.2012
(51) Int. Cl.: G01N 21/90, G01N 21/84, G01N 21/88, G01N 21/35, G01N 25/72

(54) **Verfahren und System zum Prüfen von mit einer Gasbarriere-Schicht versehenen Gegenständen**
Method and system for testing objects with a gas barrier coating
Procédé et système de vérification de plusieurs objets pourvus d'une couche de barrière de gaz

(30) Priorität: 15.12.2011 EP 11193830
(43) Veröffentlichungstag der Anmeldung: 19.06.2013
(73) Patentinhaber: Finatec Holding AG, 2555 Brügg bei Biel (CH)
(72) Erfinder: Schärer, Matthias, 3270 Aarberg (CH); Kubalek, Bernhard, 3302 Moosseedorf (CH); Maibach, Fridolin, 2560 Nidau (CH); Hermle, Matthias, 2555 Brügg (CH)
(74) Vertreter: Hoppe, Lars

(56) Entgegenhaltungen:
- JP-A- 2003 004 648
- JP-A- 2007 256 076
- JP-A- 2010 032 374
- US-A1- 2009 091 050
- "IR Camera ORCA-R2", TECHNICAL NOTE HAMAMATSU,, 1 January 2008 (2008-01-01), pages 1-8, XP007921625,
- "Onca-MWIR-InSb Midwave thermal infrared camera extended into the SWIR", 20080101, 1 January 2008 (2008-01-01), pages 1-2, XP007922591,
- MYRIAM GILLISJANS: "Xenics Presents New IR Technology for Machine Vision with Thermography Plus: Image Recording and Analysis for Automated Swine Flue Detection", VISION 2009,, 14 September 2009 (2009-09-14), pages 1-2, XP007922590,

## Beschreibung

### Sachgebiet der Erfindung

Die vorliegende Erfindung bezieht sich auf ein Verfahren und ein entsprechendes System zum Prüfen von mit einer Gasbarriere-Schicht versehenen Gegenständen. Insbesondere bezieht sich die vorliegende Erfindung auf ein Verfahren und ein entsprechendes System zum Prüfen von mit einer Gasbarriere-Schicht versehenen Gegenständen, welche aus mindestens einer Grundschicht aus einem ersten Material und mindestens einer Gasbarriere-Schicht aus einem anderen Material bestehen, wobei mittels eines Bildaufnahmemoduls ein Abbild von jedem Gegenstand aufgenommen und durch ein Verarbeitungsmodul derart verarbeitet wird, dass defekte Gegenstände entdeckt und ausgeschieden werden.

### Stand der Technik

Frische Getränke (zum Beispiel frische Milch oder gepresste Fruchtsäfte) werden heute sehr oft in Kunststoffbehältern auf dem Markt angeboten. Solche Behälter sind häufig in der Form einer Flasche mit einem entsprechenden Schraubdeckel. Als Materialien für die Herstellung solcher Kunststoffbehälter eignen sich insbesondere Polypropylen (PP) oder Polyethylen (PE), wobei auch viele andere Materialien wie zum Beispiel PET (Polyethylenterephthalat) verwendet werden können. Dieselben Materialien werden üblicherweise auch für die Herstellung von Schraubdeckeln verwendet. Bei gewissen anderen Produkten werden Dosen bereitgestellt, welche durch auf die Öffnung passend aufsetzbare Deckel abgeschlossen werden. Solche Deckel werden oft als "Schnappdeckel" bezeichnet, weil sie mit dem Flansch der Behälteröffnung einen Schnappverschluss bilden.

Bei solchen Frischprodukten ist es besonders wichtig, dass sie vom Zeitpunkt der Verpackung bis zum Zeitpunkt des Konsums im einwandfreien Zustand bleiben können. Es hat sich insbesondere gezeigt, dass ein Kontakt der Produkte mit dem Sauerstoff aus der Umgebungsluft sehr schnell zu diversen Reaktionen und demzufolge zu einer negativen Veränderung der frischen Nahrungsmittel führt. Obwohl viele dieser Änderungen die Essbarkeit der Produkte nicht wirklich beeinträchtigen, so führen sie doch zu einer erheblichen Geschmacks-, Geruchs-, Farb- oder Konsistenzveränderung, was sich auf den Verkauf solcher Produkte negativ auswirkt.

Weil die klassischen Schraubendeckel für Kunststoffflaschen oder Schnappdeckel für Dosen typischerweise nicht luftdicht sind, sind schon diverse Massnahmen vorgeschlagen worden, um eine luftdichte Verschliessung dieser frischen Nahrungsmittel zu gewährleisten. Eine der am häufigsten eingesetzten Massnahmen ist eine luftdichte Versiegelung der Behälteröffnung, welche vor dem Konsum zuerst entfernt werden muss. Zu diesem Zweck wird typischerweise eine aluminiumhaltige Folie eingesetzt, dessen Enden durch ein besonderes Lötverfahren an der Öffnung des Behälters luftdicht angebracht werden. Danach wird der Behälter noch durch den Schraubendeckel abgeschlossen. Allerdings birgt eine solche zusätzliche Folie zahlreiche Nachteile, insbesondere weil der Verpackungsprozess bei solchen Behältern durch die Zufügung eines zusätzlichen Schritts erschwert und damit auch verteuert wird. Aber auch für die Konsumenten ist eine solche Verschliessung mit Nachteilen verbunden, weil die Nahrungsmittel nicht konsumiert werden können, bevor der Schutzfilm entfernt wird. Zudem entfällt der Luftschutz nach dem Entfernen der Schutzfolie vollständig, so dass nicht ganz aufgebraucht Nahrungsmittel nicht mehr sehr lange aufbewahrt werden können. Ethylen-Vinylalkohol-Copolymer (EVOH) ist ein Material, oder eine Gruppe von Materialien, welche sich ausgezeichnet zur luftdichten Versiegelung eignen, weil sie hervorragende Gasbarrieren-Eigenschaften besitzen. Zudem sind EVOH-Copolymere gegen Öle und organische Lösungsmittel widerstandsfähig und können ausserdem sehr einfach auf andere Kunststoffe aufgebracht werden, mit welchem sie feste Verbunde bilden. Diese vorteilhaften Eigenschaften haben dazu geführt, EVOH in der Verpackungsindustrie, besonders im Bereich der medizinischen, pharmazeutischen und kosmetischen Waren zu verwenden. Ausserdem hat man kürzlich angefangen, bei den aus herkömmlichen Kunststoffen hergestellten Schraubendeckeln entweder eine EVOH-Beschichtung oder eine EVOH-Zwischenschicht zu bilden. Eine solche zusätzliche EVOH-Schicht führt nämlich dazu, dass eine luftdichte Verschliessung von Behältern ausschliesslich durch den Deckel ermöglicht wird, wodurch zusätzliche Schutzfilme vollkommen entfallen. Auf diese Weise können auch die Verpackungsprozesse vereinfacht werden, wodurch die Produkte wesentlich billiger angeboten werden können. Auch bieten solche Deckel den Schutz gegen die Umgebungsluft auch nach der Öffnung der Behälter, was bei den herkömmlichen Methoden nicht gewährleistet werden kann.

Allerdings darf für eine zuverlässige Luftverschliessung die EVOH-Schicht keinerlei Lücken aufweisen, so daß es nicht nur auf die Anwesenheit von EVOH sondern auf deren Lücken- und Fehlerfosigkeit sowie ausreichender Schichtdicke ankommt. Lücken in der EVOH-Schicht können nämlich dazu führen, dass die Umgebungsluft trotz des Verschlusses in den Behälter gelingen kann, wodurch die oben beschriebenen Probleme in Bezug auf die Veränderung der frischen Produkte entstehen. Nun ist es aber so, dass zurzeit leider noch keine zufriedenstellenden Prüfverfahren existieren, mittels welche Schraubendeckels mit einer EVOH-Schicht im industriellen Masse geprüft werden können. EVOH-Schichten können nämlich optisch nicht von den Deckeln unterschieden werden, wodurch ein Prüfen solcher beschichteten Schraubendeckel mit Hilfe von klassischen Inspektionsverfahren gar nicht möglich ist. Aus diesem Grund ist ein breiter Einsatz von solchen Deckeln leider noch nicht vorhanden.

Aus der WO 2007/021551 A1 ist ein Verfahren zur Bestimmung der Echtheit von Verpackungen pharmazeutischen Materials bekannt. Diese originalen Verpackungen bestehen aus PP oder HDPE und etwa 5% Beimischungen von EVA. Bei diesem Verfahren wird mittels eines FTIR-Spektrometers ein Spektrum des Verpackungsmaterials aufgenommen und aus der Anwesenheit oder Abwesenheit von bestimmten Peaks auf das Vorhandensein oder eben nicht-Vorhanden von EVA und damit auf eine Original-Verpackung geschlossen.

Aus der US 2002/0033943 A1 ist ein Verfahren zur Qualitätsbestimmung von Gegenständen aus farbigem Plastik bekannt, bei dem eine im sichtbaren Licht und nahen Infrarot arbeitende Kamera dazu verwendet wird, Blasen, Partikel oder kristalline Bereiche in dem Wandmaterial zu entdecken oder um Füllhöhen in dunklen Behältern zu bestimmen. Der aus PP, PE oder EVOH bestehende Gegenstand wird hierzu mit Infrarotlicht von 700 nm bis 2000 nm bestrahlt und reflektiertes, gestreutes oder nicht-absorbiertes Licht detektiert.

Aus der JP 2010 032374 A ist die Verwendung von Infrarotem Licht zur Durchleuchtung becherartiger Gegenstände bekannt, die eine EVOH-Gasbarriereschicht aufweisen.

Aus der US2009/0091050 A1 sind eine Vorrichtung und ein Verfahren bekannt, die unter Einstrahlung von UV-Licht eine EVOH-Schicht in einem Körper zur Fluoreszenz anregen und das abgestrahlte Fluoreszenzlicht im Bereich zwischen 350 nm und 1.000nm mittels eines Fluoreszenzdetektors messen, der eine CCD-Kamera sein kann.

### Zusammenfassung der Erfindung

Es ist daher eine Aufgabe der Erfindung, ein Verfahren zum Prüfen von mit einer Gasbarriere-Schicht versehenen Gegenständen sowie ein zur Durchführung dieses Verfahrens geeignetes System vorzuschlagen, bei welchen die Nachteile der bekannten Verfahren und Systeme überwunden, zumindest aber stark vermindert sind. Insbesondere ist eine Aufgabe der Erfindung, ein Verfahren und das entsprechende System zum Prüfen von mit einer Gasbarriere-Schicht versehenen Gegenständen anzubieten, dank welchen eine zuverlässige, schnelle und einfache automatische Kontrolle gewährleistet ist. Ausserdem sollen die fehlerhaften Gegenstände auch automatisiert ausgeschieden werden können.

Gemäss der vorliegenden Erfindung werden diese Ziele insbesondere durch die Elemente der beiden unabhängigen Ansprüche 1 oder 8 erreicht. Weitere vorteilhafte Ausführungsformen gehen zu dem aus den abhängigen Ansprüchen und der Beschreibung hervor.

Insbesondere werden diese Ziele der Erfindung dadurch erreicht, dass im Verfahren zum Prüfen von mit einer Gasbarriere-Schicht versehenen Gegenständen, welche aus mindestens einer Grundschicht aus einem ersten Material und mindestens einer Gasbarriere-Schicht aus einem zweiten Material bestehen, wobei mittels eines Bildaufnahmemoduls ein Abbild von jedem Gegenstand aufgenommen und durch ein Verarbeitungsmodul derart verarbeitet wird, dass defekte Gegenstände entdeckt und ausgeschieden werden, durch das Bildaufnahmemodul das Abbild jedes Gegenstandes im Bereich des unsichtbaren Lichts gemacht wird und das aufgenommene Abbild durch das Verarbeitungsmodul untersucht wird, wobei das Vorhandensein, das Fehlen oder die Dicke der Gasbarriere-Schicht auf Grund des Abbilds ermittelt wird. Damit nutzt die Erfindung die sich an den sichtbaren Bereich des elektromagnetischen Spektrums anschließenden Wellenlängenbereiche von UV- und IR-Licht, in denen viele Materialien andere Eigenschaften, insbesondere Absorptionseigenschaften, als im sichtbaren Licht aufweisen.

Der Vorteil dieser Erfindung liegt insbesondere darin, dass die mit einer Gasbarriere-Schicht versehenen Gegenstände einer Bildprüfung im Bereich des unsichtbaren Lichts unterzogen werden, wodurch die im Bereich des unsichtbaren Lichts erkennbaren, aber bei sichtbaren Licht nicht auffindbaren Fehler in der Gasbarriere-Schicht entdeckt werden können. Da das Material des Körpers (bzw. der Grundschicht) des Gegenstands und das Material der Gasbarriere-Schicht typischerweise die gleiche Farbe aufweisen, können sie mittels einer Bildverarbeitung im Bereich des sichtbaren Lichts wie oben angedeutet nicht oder nur schwer und unpräzise voneinander unterschieden werden. Eine Analyse im Bereich des unsichtbaren Lichts löst dieses Problem und bietet ein zuverlässiges Prüfverfahren an.

In einer Ausführungsform der vorliegenden Erfindung werden das erste Material der Grundschicht und das zweite Material der Gasbarriere-Schicht derart ausgewählt, dass sie im Bereich des unsichtbaren Lichts ein unterschiedliches Abbild ergeben. Beispielsweise kann ein erstes Material im erfassten Abbild in einer ersten Farbe erscheinen, während das Vorhandensein eines anderen Materials durch eine andere Farbe repräsentiert wird. Bereiche, in welchen beide Materialien festgestellt werden können, erhalten somit im aufgenommenen Abbild eine Farbe, welche zum Beispiel durch die Mischung der beiden anderen Farben entsteht. Selbstverständlich ist es aber auch ohne weiteres möglich, die verschiedenen Schichten durch dieselbe Farbe darzustellen, indem beispielsweise verschiedene Farbtöne, Helligkeiten oder Kontraste verwendet werden. Diese Ausführungsform hat unter anderem den Vorteil, dass das unterschiedliche Abbild des ersten Materials und des zweiten Materials im Bereich des unsichtbaren Lichts zu einer einfachen Untersuchung des Vorhandenseins der Gasbarriere-Schicht verwendet werden kann. Auf diese Weise können auch die Bildverarbeitungsalgorithmen relativ simpel gehalten werden, wodurch eine schnellere Verarbeitung möglich wird.

In einer anderen Ausführungsform der vorliegenden Erfindung wird das Abbild des Gegenstands auf vorbestimmten Wellenlängen untersucht, wobei diese Wellenlängen in Abhängigkeit vom ersten Material des Körpers und vom zweiten Material der Gasbarriere-Schicht ausgewählt werden. Der Vorteil dieser Ausführungsform liegt insbesondere darin, dass die Untersuchung des Abbilds auf die Untersuchung der vorbestimmten Wellenlängen reduziert werden kann, wodurch eine noch einfachere und noch schnellere Verarbeitung ermöglicht wird. Da gezeigt werden kann, dass verschiedene Kunststoffmaterialien oft verschiedene Wellenlängen im Bereich des unsichtbaren Lichts reflektieren-oder absorbieren, kann eine sehr präzise Unterscheidung verschiedenen Materialien ohne einen sehr grossen Aufwand getroffen werden. Damit werden erfindungsgemäß mit großem Vorteil Unterschiede im Streu-, Reflexions- und/oder Absorptionsverhalten beider Materialien der Gegenstände im Bereich des UV- und/oder IR-Lichtes genutzt.

In einer weiteren Ausführungsform ist das Bildaufnahmemodul eine im Bereich der Infrarotstrahlung sensible Kamera. Der Vorteil dieser Ausführungsform liegt insbesondere darin, dass nun ein im Bereich des Infrarotlichts gemachtes Abbild der mit einer Gasbarriere-Schicht versehenen Gegenstände verwendet werden kann. Infrarotkameras werden heutzutage in verschiedenen technischen Bereichen eingesetzt, sodass deren Verwendung mittlerweile einfach und kostengünstig erreicht werden kann. Zudem lässt sich zeigen, dass die verschiedenen Kunststoffe insbesondere im Bereich der Infrarotstrahlung ganz spezifische Absorptions- und Emissionseigenschaften sowie Reflexionsmuster aufweisen, wodurch das Prüfen einer Gasbarriere-Schicht aus einem Material, das sich vom Material des Körpers des Gegenstandes unterscheidet, in diesem Bereich speziell gute Resultate liefert. Eine IR-Kamera bietet trotz höherer Beschaffungs- und Betriebskosten gegenüber anderen IR-fähigen Bildaufzeichnungsgeräten wie Mikrobolometern mit großem Vorteil eine geringe Belichtungszeit und eine Wellenlängenspezifität und erlaubt somit mit großem Vorteil eine zügige und kontinuierliche Kontrolle der an ihr vorbeigeführten Gegenstände. Hierdurch lassen sich wirtschaftlich besonders wertvolle, hohe Durchsatzraten erreichen.

In einer wieder anderen Ausführungsform der vorliegenden Erfindung wird beim Ermitteln eines fehlerhaften Gegenstands dieser Gegenstand durch ein Aussonderungsmodul aufgrund eines Signals vom Verarbeitungsmodul ausgesondert. Der Vorteil dieser Ausführungsform liegt insbesondere darin, dass die fehlerhaften Gegenstände auf eine automatisierte Weise ausgesondert werden können, wodurch der Prüfprozess besonders effizient und kostengünstig gestaltet werden kann.

In einer anderen Ausführungsform der vorliegenden Erfindung werden die Gegenstände durch eine Fördereinrichtung vor dem Bildaufnahmemodul derart transportiert, dass ein Abbild von jedem Gegenstand aufgenommen wird. Der Vorteil dieser Ausführungsform liegt unter anderem darin, dass die zu prüfenden Gegenstände durch eine Fördereinrichtung bewegt werden können, während die sensiblen Elemente des Systems wie zum Beispiel das Bildaufnahmemodul fixiert werden können. Auf diese Weise wird einerseits die Wahrscheinlichkeit von Pannen verkleinert und auf der anderen Seite wird auch die Präzision bei den Aufnahmen der Abbilder der zu prüfenden Gegenstände erhöht.

In Ausgestaltung der Erfindung ist vorgesehen, daß die Fördereinrichtung die Gegenstände kontinuierlich vor dem Bildaufnahmemodul vorbeiführt. In Kombination mit der ortsfesten, schnell arbeitenden gekühlten IR-Kamera erlaubt das erfindungsgemäße Verfahren somit einen hohen Durchsatz an Gegenständen. Unter kontinuierlich versteht die Erfindung damit in erster Line einen zeitlich nicht unterbrochenen, fließenden Transport von einzelnen Gegenstände vor die Optik der Kamera. Ein zeitlich unterbrochener Transport, bei dem jedoch das Bildaufzeichnungsgerät kontinuierlich über die kurzfristig ruhenden Gegenstände verfahren wird, wäre im Sinne der Erfindung ebenfalls kontinuierlich. Diese Ausführung entspricht einer Batch-Verarbeitung einer Gruppe von Gegenständen, über die das Bildaufzeichnungsgerät verfahren wird, während die Gegenstände selber ruhen. Demnach versteht die Erfindung unter Nicht-Kontinuierlich nur das Anhalten des Bildaufnahmemoduls von Aufnahme zu Aufnahme.

Je nach Kamera erfolgt dieser Transport der Gegenstände dabei in Form von in einer Reihe nacheinander folgenden Gegenständen, also linear. Sollten Kamera und Software dazu fähig sein, kann der Transport natürlich auch zwei- oder mehrreihig erfolgen, in diesem Fall nähme die ortsfeste oder kontinuierlich bewegliche Kamera mit jedem Bild zwei oder mehr, beispielsweise vier Gegenstände gleichzeitig auf. Erfindungsgemäß ist auch die Anordnung von je einer Kamera pro Reihe. Die in zwei oder mehr Reihen angeordneten Gegenstände können dabei gestaffelt "auf Lücke" oder in Spalten angeordnet sein. Im ersteren Fall könnte die Aussonderungsvorrichtung unverändert bleiben, im zweiten Fall müsste sie in zwei mehr oder weniger entgegengesetzte Richtungen wirkend sein, um beim Ausstoß fehlerhafter Gegenstände die fehlerfreien nicht versehentlich mitzureißen. Der Transportweg der Fördereinrichtung kann dabei auch Kurven oder Biegungen enthalten, beispielsweise als Drehteller ausgebildet sein. Der Transportweg kann jede beliebige Orientierung im Raum aufweisen, also auch beispielsweise rein vertikal orientiert und demnach als Fall- oder Gleitstrecke ausgebildet sein.

In einer nochmals anderen Ausführungsform der vorliegenden Erfindung ist ein Bestrahlungselement vorgesehen, mittels welchem die Gegenstände durch die Infrarotstrahlung bestrahlt werden. Diese Ausführungsform hat insbesondere den Vorteil, dass die zu prüfenden, mit einer Gasbarriere-Schicht versehenen, Gegenstände durch eine externe Infrarotquelle bestrahlt werden, so dass die verschiedenen Materialien der Grundschicht und der Gasbarriere-Schicht diese Strahlen reflektieren, streuen oder emittieren absorbieren können. Da, wie bereits erwähnt, verschiedene Kunststoffe verschiedene Wellenlängen im Infrarotbereich reflektieren, streuen oder absorbieren, kann aufgrund der im Abbild aufgenommenen Wellenlängen sehr einfach auf das Vorhandensein beziehungsweise das Fehlen, oder aber auf die Dicke der Gasbarriere-Schicht geschlossen werden. Durch die Anpassung der Bestrahlungsintensität kann zudem den verschiedenen Formen beziehungsweise Dimensionen der zu prüfenden beschichteten Gegenstände sehr einfach Rechnung getragen werden.

In einer anderen Ausführungsform der vorliegenden Erfindung ist ein Wärmeelement vorgesehen, mittels welchem die Gegenstände derart erwärmt werden, dass sie eine Eigenstrahlung im Infrarotbereich entwickeln. Das Wärmeelement kann dabei anstelle des Bestrahlungselements oder neben dem Bestrahlungselement eingesetzt werden. Der Vorteil dieser Ausführungsform der vorliegenden Erfindung liegt insbesondere darin, dass zur Aufnahme des Abbilds der mit einer Gasbarriere-Schicht versehenen Gegenstände ihre Eigenstrahlung verwendet werden kann. In diesem Fall verwendet das erfindungsgemäße Verfahren zur Aufzeichnung der von den Gegenständen emittierten IR-Strahlung neben der IR-Kamera auch alternativ oder zusätzlich ein Bolometer, insbesondere ein Mikrobolometer. Da die Infrarotstrahlung im Wesentlichen der Wärmestrahlung entspricht, können verschiedene Temperaturen der Körper durch eine entsprechende Aufnahmeeinheit aufgenommen werden. Da gezeigt werden kann, dass sich verschiedenen Kunststoffe bei einer zeitlich begrenzten Erwärmung unterschiedlich schnell erwärmen, ist leicht nachvollzuziehen, dass sie auch unterschiedliche Wärmebilder ergeben. Dank dieser Eigenschaft können wiederum die verschiedenen Materialien voneinander unterschieden werden, was zu einer einfachen und zuverlässigen Prüfung von Gegenständen verwendet werden kann.

Das erste Material der Grundschicht der zu prüfenden Gegenstände kann typischerweise Polypropylen und/oder Polyethylen sein, während das zweite Material der Gasbarriere-Schicht typischerweise das Ethylenvinylacetat (EVA) und/oder Ethylen-Vinylalkohol-Copolymer (EVOH) ist. Selbstverständlich sind aber auch andere geeigneten Materialien möglich, solange sie im aufgenommenen Abbild im Bereich des unsichtbaren Lichts ein unterschiedliches Muster ergeben.

An dieser Stelle soll erwähnt werden, dass sich die vorliegende Erfindung neben dem beschriebenen erfindungsgemässen Verfahren zum Prüfen von mit einer Gasbarriere-Schicht versehenen Gegenständen auch auf ein entsprechendes System zum Prüfen von mit einer Gasbarriere-Schicht versehenen Gegenständen bezieht.

### Kurze Beschreibung der Zeichnungen

Nachfolgend werden Ausführungsformen der vorliegenden Erfindung anhand von Beispielen beschreiben. Die Beispiele der Ausführungen werden durch folgende beigelegten Figuren illustriert:
Figur 1 zeigt schematisch eine blockartige Darstellung eines Systems zum Prüfen von mit einer Gasbarriere-Schicht versehenen Gegenständen gemäss einer ersten Ausführungsform der vorliegenden Erfindung, von der Seite gesehen.
Figur 2 zeigt einen vergrösserten Ausschnitt aus der Figur 1, wo dieser durch einen Kreis dargestellt ist.
Figur 3 zeigt schematisch eine blockartige Darstellung eines Systems zum Prüfen von mit einer Gasbarriere-Schicht versehenen Gegenständen gemäss einer zweiten Ausführungsform der vorliegenden Erfindung, von der Seite gesehen.
Figur 4 zeigt einen vergrösserten Ausschnitt aus der Figur 3, wo dieser durch einen Kreis dargestellt ist.

### Detaillierte Beschreibung der Ausführungsformen

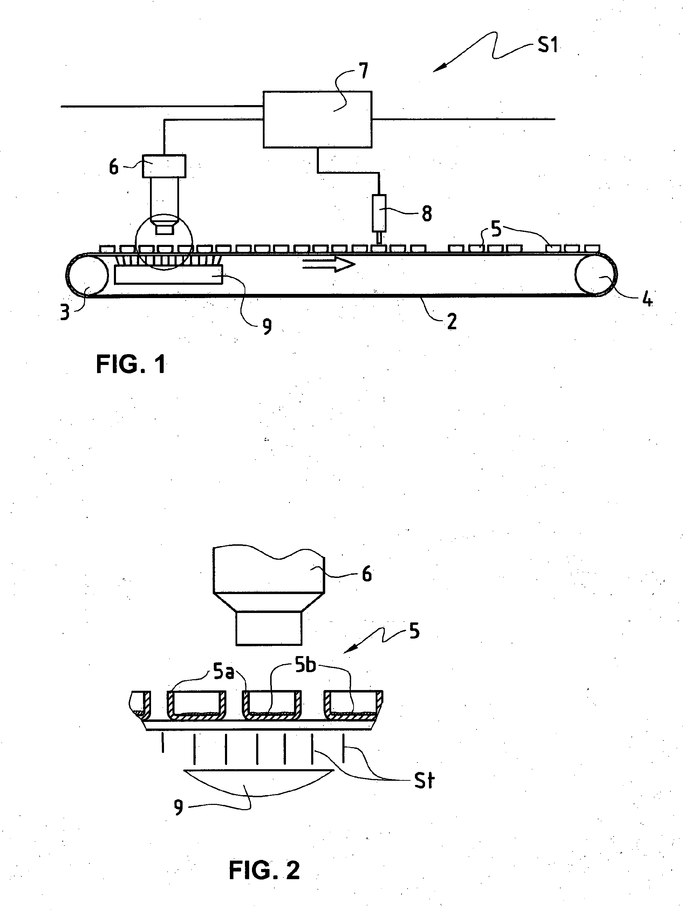

In Figur 1 wird schematisch und blockartig ein System S1 zum Prüfen von mit einer Gasbarriere-Schicht versehenen Gegenständen 5 illustriert, welches zur Realisierung des Verfahrens gemäss einer ersten Ausführungsvariante der vorliegenden Erfindung verwendet werden kann. Die zu prüfenden Gegenstände 5 sind typischerweise aus Kunststoff hergestellte Schraubendeckel, durch welche Behälter für Flüssigkeiten (z.B. Flaschen) abgeschlossen werden können. Diese Erfindung ist aber selbstverständlich nicht auf solche Schraubendeckel beschränkt und sie bezieht sich gleichwohl auf viele andere, mit einer Gasbarriere-Schicht versehenen Gegenstände 5, welche eine ähnliche Struktur aufweisen, zum Beispiel Schnappdeckel für Dosen. Selbstverständlich ist es auch durchaus denkbar, Gegenstände 5 zu prüfen, welche überhaupt keine Verschlüsse sind, sondern bei welchen einfach gute Gasbarriere-Eigenschaften verlangt werden.

Das System S1 umfasst im Wesentlichen eine Fördereinrichtung 2, durch welche die mit einer Gasbarriere-Schicht versehenen Gegenstände 5 transportiert werden können. Die Fördereinrichtung 2 kann beispielsweise als ein Förderband mit den entsprechenden Antriebseinrichtungen 3, 4 ausgebildet werden, auf welches die zu prüfenden Gegenstände 5 gestellt werden. Die Fördereinrichtung 2 kann auch eine Freifallstrecke sein oder aufweisen, sie kann die Gegenstände anderweitig berührungslos fördern, beispielsweise über Druckluft, falls möglich magnetisch oder induktiv oder die Gegenstände auch in anderer Weise berührend haltern, solange sie die Aufnahme von Emission, Absorption, Streuungs- oder Reflexionsstrahlung der Gegenstände durch die Kamera nicht einschränkt. Eine übliche Fördergeschwindigkeit beträgt 80m/min, so daß in Abhängigkeit der Aufnahme- und Integrationszeit etwa 1.000 Gegenstände pro min untersucht werden. Besonders vorteilhaft und erfindungswesentlich ist dabei, daß die Fördereinrichtung 2 unabhängig von ihrer Ausführung die Gegenstände 5 kontinuierlich vor der Kamera vorbeiführt, so daß hohe Durchsätze erreicht werden.

Die Gegenstände 5 können dabei sowohl manuell als auch durch dazu geeignete Einrichtungen auf die Fördereinrichtung 2 gebracht werden. Insbesondere ist es auch denkbar, die zu prüfenden, mit einer Gasbarriere-Schicht versehenen, Gegenstände 5 unmittelbar von der Herstellungsanlage auf die Fördereinrichtung 2 zu bringen, so dass vor ihrer Weiterleitung automatisch auf Fehler geprüft werden können. In diesem Fall arbeitet die erfindungsgemäße Vorrichtung in-line mit der Produktionsanlage der Gegenstände.

Nach der erfolgten Prüfung im System S1 werden die fehlerhaften mit einer Gasbarriere-Schicht versehenen Gegenstände 5 automatisch aussortiert. Hierzu ist ein Aussonderungsmodul 8 vorgesehen, welches die defekten Gegenstände 5 von der Fördereinrichtung 2 entfernt. Diese Aussonderung kann zum Beispiel durch einen kurzen, gezielten Druckluftstoss erfolgen, wobei die defekten, mit einer Gasbarriere-Schicht versehenen, Gegenstände 5 von der Fördereinrichtung 2 weggeblasen und anschliessend auf eine geeignete Weise entsorgt oder recycelt werden. Es ist auch möglich, andersartige Aussonderungsmodule 8 vorzusehen, durch welche die fehlerhaften, mit einer Gasbarriere-Schicht versehenen, Gegenstände 5 ausgesondert werden können. Hierzu müssen jedoch die Anforderungen im Bezug auf die Geschwindigkeit, Sicherheit und Effizienz erfüllt werden. Diejenigen Gegenstände 5, welche die Prüfung erfolgreich bestehen, werden hingegen durch die Fördereinrichtung 2 weitertransportiert und verlassen anschliessend das System S1. Am Ausgang des Systems S1 können selbstverständlich Vorrichtungen angebracht werden, welche die geprüften Gegenstände 5 weitertransportieren, beispielsweise in eine Bedruckungs-, Reinigungs- oder eine andere Anlage. Solche weiteren Elemente sind jedoch bereits bekannt und beeinträchtigen die vorliegende Erfindung nicht. Aus diesem Grund werden sie auch nicht näher beschrieben.

Die Prüfung der mit einer Gasbarriere-Schicht versehenen Gegenstände 5 im System S1 erfolgt grundsätzlich dadurch, dass von jedem Gegenstand 5 ein Abbild im Bereich des unsichtbaren Lichts gemacht wird, und dass dieses aufgenommene Abbild anschliessend mittels einer Bilderkennungssoftware untersucht wird, um die Fehler in den Gegenständen 5 festzustellen. Die Fehler, welche man insbesondere entdecken möchte, beziehen sich auf die Qualität der Gasbarriere-Schicht, d.h. vor allem das Vorhandensein oder das Fehlen, aber nicht zuletzt auch auf die Dicke und Ebenheit dieser Gasbarriere-Schicht 5b. Es ist so, dass eine lückenlose Gasbarriere-Schicht 5b ein wesentlicher Qualitätsfaktor beispielsweise bei der Herstellung von luftdichten Schraubendeckeln 5 ist, weswegen eine zuverlässige Prüfung der Beschichtung 5b extrem wichtig ist.

Das Abbild jedes Gegenstandes 5 im System S1 wird durch ein Bildaufnahmemodul 6 gemacht. Das Bildaufnahmemodul 6 ist typischerweise eine im Bereich der Infrarotstrahlung sensible, gekühlte IR-Kamera, deren Arbeitsbereich bei Wellenlängen zwischen 1 µm und 14 µm liegt, insbesondere zwischen 2,5 µm und 5,1 µm liegt. Als Infrarotstrahlung wird generell die Strahlung im Spektralbereich zwischen 780 nm und 1 mm bezeichnet, was einem Frequenzbereich von etwa 300 GHz bis 400 THz entspricht. Solche Kameras sind in der Lage, verschiedene, für das menschliche Auge unsichtbare, Wellenlängen zu registrieren, wobei verschiedene Wellenlängen im aufgenommenen Abbild unterschiedlich dargestellt werden. Da verschiedene Gegenstände sowie verschiedene Materialien normalerweise verschiedene Wellenlängen im unsichtbaren Bereich absorbieren, reflektieren oder streuen, bzw. emittieren, kann die Auswertung eines durch das Bildaufnahmemodul 6 aufgenommenes Abbild eines mit einer Gasbarriere-Schicht versehenen Gegenstandes 5 zur Prüfung seiner Eigenschaften verwendet werden. Die in diesem Beispiel verwendete Kamera weist eine Belichtungszeit von etwa 0,4 ms auf und ermöglicht eine Auflösung von 640 x 512 Pixeln und eine thermische Auflösung von <20 mK. Die Kamera kann selbstverständlich auch andere Auflösungen, beispielsweise 320x256 Pixel aufweisen, um die Belichtungszeit noch kürzer gestalten zu können.

Hierzu wird das durch das Bildaufnahmemodul 6 aufgenommene Abbild des zu prüfenden mit einer Gasbarriere-Schicht versehenen Gegenstandes 5 an ein Verarbeitungsmodul 7 übermittelt, wo die Auswertung des Abbilds durchgeführt wird. Zur Auswertung können verschiedene Algorithmen verwendet werden, welche sich die Tatsache zu Nutze machen, dass verschiedene Materialien im Bereich des unsichtbaren Lichts wie oben erwähnt jeweils ein klar voneinander unterscheidbares Abbild ergeben. Eine Bilderkennungssoftware erkennt das Vorhandensein, Fehlen oder die Dicke der Barriere-Schicht sowie Fehler im Fluss des Kunststoffs, also Unregelmäßigkeiten innerhalb der EVOH oder EVA-Schicht. Nachdem ein fehlerhafter Gegenstand 5 durch das Verarbeitungsmodul 7 entdeckt worden ist, wird vom Verarbeitungsmodul 7 ein Kontrollsignal an das Aussonderungsmodul 8 abgegeben, wodurch der defekte Gegenstand 5 ausgesondert werden kann.

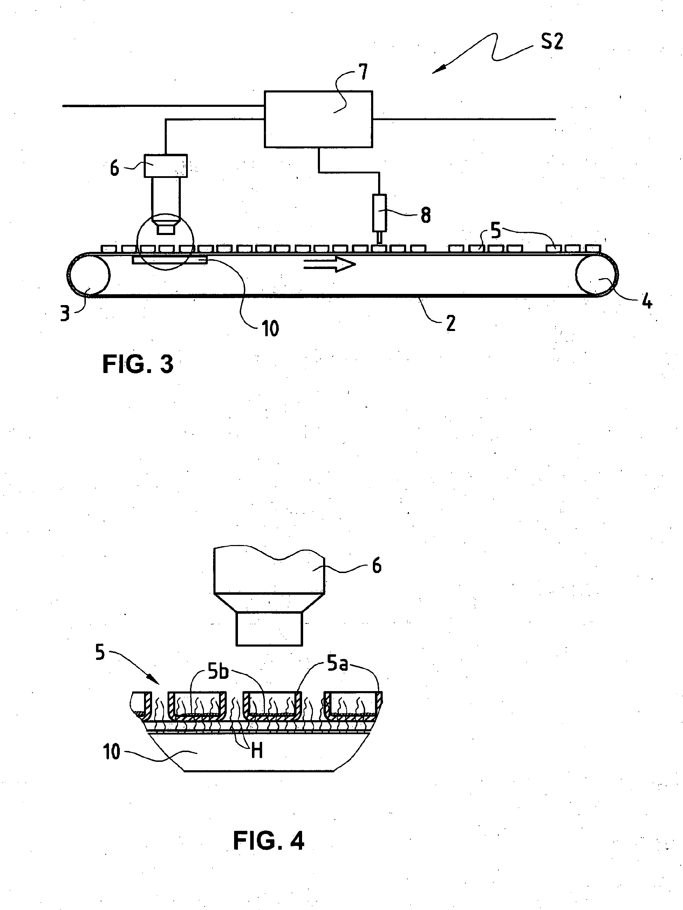

Figur 3 zeigt ein System S2, welches praktisch die gleiche Struktur aufweist wie das bereits beschriebene System S1. Es umfasste ebenfalls eine Fördereinrichtung (beispielsweise ein Förderband 2) mit den entsprechenden Antriebseinrichtungen 3, 4, ein Bildaufnahmemodul 6, ein Verarbeitungsmodul 7 und ein Aussonderungsmodul 8. Auch im System S2 werden die zu prüfenden mit einer Gasbarriere-Schicht versehenen Gegenstände 5 durch die Fördereinrichtung 2 vor dem Bildaufnahmemodul 6 geführt, so dass ein entsprechendes Abbild im Bereich des unsichtbaren Lichts gemacht werden kann. Auch im System S2 (welches einer zweiten Ausführungsform der vorlegenden Erfindung entspricht) werden die aufgenommenen Abbilder der zu prüfenden mit einer Gasbarriere-Schicht versehenen Gegenstände 5 an das Verarbeitungsmodul 7 übermittelt, wo sie entsprechend ausgewertet werden, und wo nach Ermitteln von fehlerhaften Gegenständen 5 diese dank einem entsprechenden Aussonderungssignal durch das Aussonderungsmodul 8 aus dem System S2 entfernt werden können.

Die oben beschriebene erste Ausführungsform der vorliegenden Erfindung, d.h. das System zum Prüfen von mit einer Gasbarriere-Schicht versehenen Gegenständen S1, und die zweite Ausführungsform der vorliegenden Erfindung, d.h. das System zum Prüfen von mit einer Gasbarriere-Schicht versehenen Gegenständen S2, unterscheiden sich hauptsächlich darin, wie das Abbild im Bereich des unsichtbaren Lichts gemacht wird.

Gemäss der ersten Ausführungsform der vorliegenden Erfindung werden die zu prüfenden mit einer Gasbarriere-Schicht versehenen Gegenstände 5 durch eine externe Infrarotstrahlung St bestrahlt. Hierzu ist ein Bestrahlungselement 9 vorgesehen, welches derart angeordnet ist, dass es die zu prüfenden Gegenstände 5 bestrahlen kann. Das Bestrahlungselement 9 arbeitet typischerweise bei niedrigen Temperaturen von um die 100°C bis 150°C und ist als Schwarzkörperstrahler ausgebildet. Die Arbeitstemperatur kann auch darüber liegen, falls dies durch verkürzte Belichtungszeiten erforderlich wird.

Figur 2 zeigt einen vergrösserten Ausschnitt aus der Figur 1, welcher in Figur 1 durch einen Kreis gekennzeichnet ist. In Figur 2 sieht man die zu prüfenden mit einer Gasbarriere-Schicht versehenen Gegenstände 5, bei welchen man klar den Gegenstandskörper (die Grundschicht) 5a und die Gasbarriere-Schicht 5b erkennen kann. Die Grundschichten 5a der Gegenstände 5 werden herkömmlicherweise aus einem Kunststoff hergestellt, welcher für die Herstellung von Schraubendeckeln, Schnappdeckeln und ähnlichen Gegenständen geeignet ist. Typischerweise wird es sich um Polypropylen (PP) oder aber Polyethylen (PE) handeln, wobei aber selbstverständlich auch ganz viele andere Kunststoffe denkbar sind. Die Gasbarriere-Schicht 5b in den Gegenständen 5 wird typischerweise aus einer Ethylen-Vinylalkohol-Copolymer (EVOH)-Schicht bestehen. Wie bereits erwähnt haben die EVOH-Copolymere hervorragende Eigenschaften, welche sie zur luftdichten Verschliessung von Behältern besonders eignen. Weil aber ausschliesslich eine lückenlose Gasbarriere-Schicht 5b einen optimalen Luftschutz bietet, ist es von grösster Bedeutung, die fehlerhaften Gegenstände 5 möglichst effizient und zuverlässig zu bestimmen.

Obwohl in Figur 2 die Gasbarriere-Schicht 5b als eine Beschichtung auf der Oberfläche der zu prüfenden Gegenstände 5 dargestellt ist, ist es ohne weiteres denkbar, dass diese Gasbarriere-Schicht 5b als eine Zwischenschicht zwischen zwei Grundschichten 5a aus einem anderen Material (oder aus mehreren anderen Materialien) ausgebildet ist. Ausserdem sind ohne weiteres auch Lösungen denkbar, wo nicht nur eine sondern mehrere Gasbarriere-Schichten 5b vorgesehen sind.

Wie in Figur 2 gesehen werden kann, werden die zu prüfenden mit einer Gasbarriere-Schicht versehenen Gegenstände 5 durch die Infrarotstrahlung St, hier schematisch durch gerade Linien dargestellt, bestrahlt. Diese Infrarotstrahlung wird danach von den mit einer Gasbarriere-Schicht versehenen Gegenständen 5 reflektiert, so dass anschliessend ein Abbild von jedem Gegenstand 5 durch das ebenfalls dargestellte Bildverarbeitungsmodul 6 gemacht werden kann. Das Material des Gegenstandskörpers (bzw. der Grundschicht) 5a und das Material der Gasbarriere-Schicht 5b können insbesondere derart gewählt werden, dass sie nach der Bestrahlung durch die Infrarotstrahlung St ein unterschiedliches Bild ergeben.

Beispielsweise kann das erste Material der Grundschicht 5a derart gewählt werden, dass es eine Reaktion wie Absorption, Emission, Streuung oder Reflexion in einem bestimmten Wellenlängenbereich (z.B. bei 820 nm) ergibt, während ein anderer Wellenlängenbereich (beispielsweise in der Gegend von 890 nm) durch das Material der Gasbarriere-Schicht 5b ausgestrahlt wird. Konkret spiegeln sich diese unterschiedlichen Reaktionen normalerweise durch unterschiedliche Transparenz der einzelnen Schichten wider. Es hat sich zum Beispiel gezeigt, dass Schichten aus EVOH-Copolymeren bei Wellenlängen zwischen ungefähr 2850 und 3000 nm eine sehr geringe Transparenz aufweisen (ca. unter 15%), während Polypropylen und Polyethylen in diesem Bereich noch sehr transparent sind (ca. über 80%). Erst bei grösseren Wellenlängen (bei ca. 3200 nm für Polyethylen bzw. bei ca. 3300 nm für Polypropylen) fällt auch die Transparenz der übrigen Kunststoff-Schichten unter den Wert von 5%. Durch eine gezielte Bestrahlung können dann die einzelnen Schichten leicht detektiert werden, wobei anzumerken ist, dass auch andere Wellenlängenbereiche verwendet werden können. So kann beispielsweise auch gezeigt werden, dass EVOH-Schichten bei Wellenlängen ab ca. 6700 nm im Vergleich zu den Polyethylen- bzw. Polypropylen-Schichten wieder eine viel geringere Transparenz aufweisen.

Eine Auswertung des Abbilds des Gegenstands 5 durch das Verarbeitungsmodul 7 kann dann durch das Vorhandensein oder das Fehlen der Reaktion in vorbestimmten Wellenlängenbereichen (also Unterschieden in Absorption, Emission, Streuung oder Reflexion zum Beispiel auf Grund der unterschiedlichen Transparenz) sehr einfach darauf schliessen, ob die jeweiligen Materialien vorhanden sind, oder ob Bereiche in den Gegenständen 5 keine Gasbarriere-Schicht aufweisen. Auf diese Weise kann die Kontrolle der Gasbarriere-Schicht 5b sehr effizient, einfach und zuverlässig durchgeführt werden. Da zudem die Auswertungsalgorithmen bei einer solchen Auswertung einfach gehalten werden können, kann auch eine sehr hohe Prüfgeschwindigkeit erreicht werden, wodurch die Effizienz des ganzen Systems gesteigert werden kann.

In Figur 4 wird entsprechend der Abbildung in Figur 2 ein Ausschnitt aus dem System S2 gemäss der zweiten Ausführungsform der vorliegenden Erfindung gezeigt. Im Gegensatz zum System S1 werden die zu prüfenden mit einer Gasbarriere-Schicht versehenen Gegenstände 5 im System S2 nicht durch die externe Infrarotstrahlung St bestrahlt sondern es wird ein Wärmeelement 10 zur Verfügung gestellt, mittels welchem die zu prüfenden, mit einer Gasbarriere-Schicht versehenen, Gegenstände 5 erwärmt werden. Die Wärme H wird in Figur 4 schematisch durch die Wellenlinien angedeutet, welche aus dem Wärmeelement 10 nach oben steigen. Durch die Erwärmung der zu prüfenden, mit einer Gasbarriere-Schicht versehenen, Gegenständen 5 entwickeln diese eine Eigenstrahlung im Infrarotbereich. Dieses Phänomen wird bereits bei den sogenannten Wärmekameras verwendet, welche beispielsweise zur Auswertung der Energieeffizienz von Gebäuden eingesetzt werden. Auch in diesem Fall macht man sich die Tatsache zu Nutze, dass unterschiedliche Materialien unterschiedliche Eigenstrahlungen entwickeln, insbesondere dass verschiedene Materialien Strahlungen mit unterschiedlichen Wellenlängencharakteristika abgeben. Wenn das Material der Grundschicht 5a des Gegenstands 5 und das Material der Gasbarriere-Schicht 5b nicht übereinstimmen, werden durch das Bildaufnahmemodul 6 unterschiedliche Wellenlängen festgestellt, wodurch wiederum die fehlerhaften Gegenstände 5 durch das Verarbeitungsmodul 7 sehr leicht entdeckt werden können.

Abgesehen von den oben beschriebenen Merkmalen funktionieren die Systeme S1 und S2 gemäss den beiden Ausführungsformen der vorliegenden Erfindung in vieler Hinsicht wie die herkömmlichen Systeme zur Prüfung von Werkstücken, bei welchen Kameras im sichtbaren Lichtbereich eingesetzt werden. Deswegen werden die entsprechenden Details an dieser Stelle ausgelassen, da sie durch Fachleute sehr einfach nachvollzogen werden können.

Es können beispielsweise Systemelemente je nach Bedarf durch andere Elemente ausgetauscht werden, welche die gleichen oder aber ähnlichen Funktionen erfüllen. Ebenfalls können zusätzliche Einrichtungen und/oder Elemente vorgesehen werden, zum Beispiel können auch mehrere Bildaufnahmeeinheiten vorgesehen werden, dank welchen die zu prüfenden Gegenstände von verschiedenen Seiten aufgenommen werden können. Auch kann eine Kombination der externen Bestrahlung und Erwärmung verwendet werden, um aussagekräftigere Abbilder zu erhalten. Schliesslich wäre es auch durchaus denkbar, die oben beschriebene Kontrolle im Bereich des unsichtbaren Lichts mit einer herkömmlichen Kontrolle im Bereich des sichtbaren Lichts miteinander zu verbinden, um eine vollständige Prüfung der Prüfstücke mit einer einzigen Anlage durchführen zu können.

## Patentansprüche

1. Verfahren zum Prüfen von mit einer Gasbarriere-Schicht versehenen Gegenständen (5), welche aus mindestens einer Grundschicht (5a) aus einem ersten Material und mindestens einer Gasbarriere-Schicht (5b) aus einem zweiten Material bestehen, wobei das erste Material der Grundschicht (5a) Polypropylen und/oder Polyethylen und das zweite Material der Gasbarriere-Schicht (5b) Ethylenvinylacetat (EVA) und/oder Ethylen-Vinylalkohol-Copolymer (EVOH) ist und wobei mittels eines Bildaufnahmemoduls (6) ein Abbild von jedem Gegenstand (5) aufgenommen und durch ein Verarbeitungsmodul (7) derart verarbeitet wird, das defekte Gegenstände (5) entdeckt und ausgeschieden werden,
bei dem
eine Fördereinrichtung (2) die Gegenstände (5) mit einer üblichen Fördergeschwindigkeit von 80 m/min kontinuierlich vor dem Bildaufnahmemodul (6) vorbeiführt und bei dem
durch das Bildaufnahmemodul (6) das Abbild jedes Gegenstandes (5) im Bereich des unsichtbaren Lichtes gemacht wird, indem das Bildaufnahmemodul (6) eine im Bereich der Infrarotstrahlung zwischen 2,5 µm und 5,1 µm arbeitende, gekühlte Infrarotkamera mit einer thermischen Auflösung von <20 mK ist, die ein Abbild jedes Gegenstandes (5) mit einer Belichtungszeit von etwa 0,4 ms oder kürzer macht und bei dem
das aufgenommene Abbild durch das Verarbeitungsmodul (7) untersucht wird, wobei das Vorhandensein, das Fehlen oder die Dicke der Gasbarriere-Schicht (5b) sowie Fehler im Fluss des Kunststoffes, also Unregelmässigkeiten innerhalb der Ethylen-Vinylalkohol-Copolymer (EVOH) oder Ethylenvinylacetat (EVA) Schicht auf Grund des Abbildes mittels
Bildverarbeitungsalgorithmen einer Bilderkennungssoftware ermittelt werden, und bei dem
die fehlerhaften Gegenstände (5) mittels eines Aussonderungsmoduls (8) automatisch aussortiert werden.

2. Verfahren nach Anspruch 1, **dadurch gekennzeichnet, dass** das erste Material der Grundschicht (5a) und das zweite Material der Gasbarriere-Schicht (5b) derart ausgewählt werden, dass sie im Bereich des unsichtbaren Lichts ein unterschiedliches Abbild ergeben.

3. Verfahren nach Anspruch 1 oder 2, **dadurch gekennzeichnet, dass** das Abbild des Gegenstands (5) auf vorbestimmte Wellenlängen untersucht wird, wobei diese Wellenlängen in Abhängigkeit vom ersten Material der Grundschicht (5a) und vom zweiten Material der Gasbarriere-Schicht (5b) ausgewählt werden.

4. Verfahren nach einem der Ansprüche 1 bis 3, **dadurch gekennzeichnet, dass** beim Ermitteln eines fehlerhaften Gegenstands (5) dieser Gegenstand (5) durch ein Aussonderungsmodul (8) aufgrund eines Signals vom Verarbeitungsmodul (7) ausgesondert wird.

5. Verfahren nach einem der Ansprüche 1 bis 4, **dadurch gekennzeichnet, dass** die Gegenstände (5) durch eine Fördereinrichtung (2) vor dem Bildaufnahmemodul (6) derart transportiert werden, dass ein Abbild von jedem Gegenstand (5) aufgenommen wird.

6. Verfahren nach einem der Ansprüche 1 bis 5, **dadurch gekennzeichnet, dass** ein Bestrahlungselement (9) vorgesehen ist, mittels welchem die Gegenstände (5) durch die Infrarotstrahlung (St) bestrahlt werden.

7. Verfahren nach einem der Ansprüche 1 bis 6, **dadurch gekennzeichnet, dass** ein Wärmeelement (10) vorgesehen ist, mittels welchem die Gegenstände (5) derart erwärmt werden, dass sie eine Eigenstrahlung im Infrarotbereich entwickeln.

8. Vorrichtung zum Prüfen von mit einer Gasbarriere-Schicht versehenen Gegenständen (5), welche aus mindestens einer Grundschicht (5a) aus einem ersten Material und mindestens einer Gasbarriere-Schicht (5b) aus einem zweiten Material bestehen, wobei das erste Material der Grundschicht (5a) Polypropylen und/oder Polyethylen und das zweite Material der Gasbarriere-Schicht (5b) Ethylenvinylacetat (EVA) und/oder Ethylen-Vinylalkohol-Copolymer (EVOH)ist und wobei ein Bildaufnahmemodul (6) ein Abbild von jedem Gegenstand (5) aufnimmt und ein Verarbeitungsmodul (7) das Abbild derart verarbeitet, dass defekte Gegenstände (5) entdeckt und ausgeschieden werden,
bei der
eine Fördereinrichtung (2) die Gegenstände (5) mit einer üblichen Fördergeschwindigkeit von 80 m/min kontinuierlich vor dem Bildaufnahmemodul (6) vorbeiführt und bei der
die Vorrichtung ein Bildaufnahmemodul (6) und ein Verarbeitungsmodul (7) umfasst, wobei das Bildaufnahmemodul (6) ein Abbild jedes Gegenstandes (5) im Bereich des unsichtbaren Lichtes aufnimmt, wobei das Bildaufnahmemodul (6) eine im Bereich der Infrarotstrahlung zwischen 2,5 µm und 5,1 µm arbeitende, gekühlte Infrarotkamera mit einer thermischen Auflösung von <20 mK und einer Belichtungszeit von etwa 0,4 ms oder kürzer ist und bei dem
das Verarbeitungsmodul (7) das aufgenommene Abbild untersucht, wobei das Verarbeitungsmodul (7) das Vorhandensein, das Fehlen oder die Dicke der Gasbarriere-Schicht (5b) sowie Fehler im Fluss des Kunststoffes, also Unregelmässigkeiten innerhalb der Ethylen-Vinylalkohol-Copolymer (EVOH) oder Ethylenvinylacetat (EVA) Schicht auf Grund des Abbildes mittels Bildverarbeitungsalgorithmen einer Bilderkennungssoftware ermittelt, und bei dem
ein Aussonderungsmodul (8) die fehlerhaften Gegenstände (5) automatisch aussortiert.

9. Vorrichtung nach Anspruch 8, **dadurch gekennzeichnet, dass** das erste Material der Grundschicht (5a) und das zweite Material der Gasbarriere-Schicht (5b) derart ausgewählt sind, dass sie im Bereich des unsichtbaren Lichts ein unterschiedliches Abbild ergeben.

10. Vorrichtung nach einem der Ansprüche 8 bis 9, **dadurch gekennzeichnet, dass** es ein Aussonderungsmodul (8) umfasst, mittels welchem fehlerhafte Gegenstände (5) aufgrund eines Signals vom Verarbeitungsmodul (7) ausgesondert werden

11. Vorrichtung einem der Ansprüche 8 bis 10, **dadurch gekennzeichnet, dass** es ein Bestrahlungselement (9) umfasst, mittels welchem die Gegenstände (5) durch die Infrarotstrahlung (St) bestrahlt werden.

12. Vorrichtung nach einem der Ansprüche 8 bis 11, **dadurch gekennzeichnet, dass** es ein Wärmeelement (10) umfasst, mittels welchem die Gegenstände (5) derart erwärmt, dass sie eine Eigenstrahlung im Infrarotbereich entwickeln.

## Claims

1. A method for testing items (5) provided with a gas-barrier layer which comprise at least one base layer (5a) made of a first material and at least one gas-barrier layer (5b) made of a second material, wherein the first material of the base layer (5a) is polypropylene and/or polyethylene and the second material of the gas-barrier layer (5b) is ethylene vinyl acetate (EVA) and/or ethylene vinyl alcohol copolymer (EVOH) and wherein by means of an image-recording module (6) an image of each item (5) is recorded and processed by a processing module (7) in such a manner that defective items (5) are detected and removed,
wherein
a conveying device (2) transports the items (5) past the image-recording module (6) continuously at a customary conveying speed of 80 m/min and wherein
the image of each item (5) is recorded by the image-recording module (6) in the invisible light spectrum, in that the image-recording module (6) is a cooled infrared camera working in the infrared radiation spectrum between 2.5 µm and 5.1 µm with a thermal resolution of < 20 mK which records an image of each item (5) with an exposure time of roughly 0.4 ms or less and wherein
the recorded image is analyzed by the processing module (7), wherein the presence, absence or thickness of the gas-barrier layer (5b) and also defects in the flow of plastic, in other words irregularities within the ethylene vinyl alcohol copolymer (EVOH) or ethylene vinyl acetate (EVA) layer, are detected based on the image by means of image-processing algorithms in image-recognition software, and wherein
the defective items (5) are automatically removed by means of a screening module (8).

2. The method according to claim 1, **characterized in that** the first material of the base layer (5a) and the second material of the gas-barrier layer (5b) are selected in such a way that they produce a different image in the invisible light spectrum.

3. The method according to claim 1 or 2, **characterized in that** the image of the item (5) is analyzed at predetermined wavelengths, wherein these wavelengths are selected depending on the first material of the base layer (5a) and the second material of the gas-barrier layer (5b).

4. The method according to one of claims 1 to 3, **characterized in that** when a defective item (5) is detected, said item (5) is separated by a screening module (8) based on a signal from the processing module (7).

5. The method according to one of claims 1 to 4, **characterized in that** the items (5) are transported by a conveying device (2) in front of the image-recording module (6) in such a manner that an image is taken of each item (5).

6. The method according to one of claims 1 to 5, **characterized in that** a radiation element (9) is provided, by means of which the items (5) are irradiated by infrared radiation (St).

7. The method according to one of claims 1 to 6, **characterized in that** a heating element (10) is provided, by means of which the items (5) are heated in such a way that they develop characteristic radiation in the infrared spectrum.

8. A device for testing items (5) provided with a gas-barrier layer which comprise at least one base layer (5a) made of a first material and at least one gas-barrier layer (5b) made of a second material, wherein the first material of the base layer (5a) is polypropylene and/or polyethylene and the second material of the gas-barrier layer (5b) is ethylene vinyl acetate (EVA) and/or ethylene vinyl alcohol copolymer (EVOH) and wherein an image-recording module (6) records an image of each item (5) and a processing module (7) processes the image in such a manner that defective items (5) are detected and removed,
wherein
a conveying device (2) conducts the items (5) past the image-rewording module (6) continuously at a customary conveying speed of 80 m/min and wherein
the device comprises an image-recording module (6) and a processing module (7), wherein the image-recording module (6) records an image of each item (5) in the invisible light spectrum, wherein the image-receiving module (6) is a cooled infrared camera working in the infrared radiation spectrum between 2.5 µm and 5.1 µm with a thermal resolution of < 20 mK and an exposure time of roughly 0.4 ms or less and wherein
the processing module (7) analyzes the image taken, wherein the processing module (7) detects the presence, absence or thickness of the gas-barrier layer (5b) and also defects in the flow of plastic, in other words irregularities within the ethylene vinyl alcohol copolymer (EVOH) or ethylene vinyl acetate (EVA) layer based on the image by means of image-processing algorithms in image-recognition software, and wherein a screening module (8) automatically removes the defective items (5).

9. The device according to claim 8, **characterized in that** the first material of the base layer (5a) and the second material of the gas-barrier layer (5b) are selected in such a way that they produce a different image in the invisible light spectrum.

10. The device according to one of claims 8 to 9, **characterized in that** it comprises a screening module (8) by means of which defective items (5) are removed based on a signal from the processing module (7).

11. The device according to one of claims 8 to 10, **characterized in that** it comprises a radiation element (9) by means of which the items (5) are irradiated by infrared radiation (St).

12. The device according to one of claims 8 to 11, **characterized in that** it comprises a heating element (10) by means of which the items (5) are heated in such a way that they develop a characteristic radiation in the infrared spectrum.

## Revendications

1. Procédé pour contrôler des objets (5) munis d'une couche de barrière de gaz, lesquels se composent au moins d'une couche de base (5a) en un premier matériau et au moins d'une couche de barrière de gaz (5b) en un deuxième matériau, le premier matériau de la couche de base (5a) étant du polypropylène et/ou du polyéthylène et le deuxième matériau de la couche de barrière de gaz (5b) étant de l'éthylène-acétate de vinyle (EVA) et/ou un copolymère d'éthylène-alcool vinylique (EVOH), et une vue étant prise de chaque objet (5) au moyen d'un module de prise de vue (6) et étant traitée par un module de traitement (7) de manière à détecter des objets (5) défectueux et à les éliminer,
dans lequel
un dispositif d'acheminement (2) fait passer en continu les objets (5) devant le module de prise de vue (6) à une vitesse d'acheminement usuelle de 80 m/min, et dans lequel,
grâce au module de prise de vue (6), la prise de vue de chaque objet (5) est réalisée dans la plage de la lumière invisible en ce que le module de prise de vue (6) est une caméra infrarouge refroidie travaillant dans la plage du rayonnement infrarouge comprise entre 2,5 µm et 5,1 µm avec une résolution thermique < 20 mK, laquelle effectue une prise de vue de chaque objet (5) avec un temps d'exposition de près de 0,4 ms ou moins, et dans lequel
la vue prise est analysée par le module de traitement (7), la présence, l'absence ou l'épaisseur de la couche de barrière de gaz (5b) ainsi que des erreurs dans le flux de la matière synthétique, à savoir des irrégularités à l'intérieur de la couche de copolymère d'éthylène-alcool vinylique (EVOH) ou d'éthylène-acétate de vinyle (EVA) en raison de la vue, étant déterminées au moyen d'algorithmes de traitement d'image d'un logiciel de reconnaissance d'image, et dans lequel
les objets défectueux (5) sont automatiquement triés au moyen d'un module de triage (8).

2. Procédé selon la revendication 1, **caractérisé en ce que** le premier matériau de la couche de base (5a) et le deuxième matériau de la couche de barrière de gaz (5b) sont sélectionnés de manière à donner une vue différente dans la plage de la lumière invisible.

3. Procédé selon la revendication 1 ou 2, **caractérisé en ce que** la vue de l'objet (5) est analysée concernant des longueurs d'onde prédéterminées, ces longueurs d'onde étant sélectionnées en fonction du premier matériau de la couche de base (5a) et du deuxième matériau de la couche de barrière de gaz (5b).

4. Procédé selon l'une des revendications 1 à 3, **caractérisé en ce que**, lors de la détermination d'un objet (5) défectueux, cet objet (5) est trié par un module de triage (8) en raison d'un signal du module de traitement (7).

5. Procédé selon l'une des revendications 1 à 4, **caractérisé en ce que** les objets (5) sont transportés devant le module de prise de vue (6) par un dispositif d'acheminement (2) de manière à prendre une vue de chaque objet (5).

6. Procédé selon l'une des revendications 1 à 5, **caractérisé en ce que** l'on prévoit un élément d'irradiation (9) à l'aide duquel les objets (5) sont irradiés par le rayonnement infrarouge (St).

7. Procédé selon l'une des revendications 1 à 6, **caractérisé en ce que** l'on prévoit un élément chauffant (10) à l'aide duquel les objets (5) sont chauffés de manière à ce qu'ils développent un rayonnement propre dans la plage des infrarouges.

8. Dispositif pour contrôler des objets (5) munis d'une couche de barrière de gaz, lesquels se composent au moins d'une couche de base (5a) en un premier matériau et au moins d'une couche de barrière de gaz (5b) en un deuxième matériau, le premier matériau de la couche de base (5a) étant du polypropylène et/ou du polyéthylène et le deuxième matériau de la couche de barrière de gaz (5b) étant de l'éthylène-acétate de vinyle (EVA) et/ou un copolymère d'éthylène-alcool vinylique (EVOH), et un module de prise de vue (6) prenant une vue de chaque objet (5) et un module de traitement (7) traitant la vue de manière à ce que des objets (5) défectueux soient découverts et éliminés,
dans lequel
un dispositif d'acheminement (2) fait passer en continu les objets (5) devant le module de prise de vue (6) à une vitesse d'acheminement usuelle de 80 m/min, et dans lequel,
le dispositif comprend un module de prise de vue (6) et un module de traitement (7), le module de prise de vue (6) prenant une vue de chaque objet (5) dans la plage de la lumière invisible, le module de prise de vue (6) étant une caméra infrarouge refroidie travaillant dans la plage du rayonnement infrarouge comprise entre 2,5 µm et 5,1 µm avec une résolution thermique < 20 mK et un temps d'exposition de près de 0,4 ms ou moins, et dans lequel
le module de traitement (7) analyse la vue prise, le module de traitement (7) déterminant la présence, l'absence ou l'épaisseur de la couche de barrière de gaz (5b) ainsi que des erreurs dans le flux de la matière synthétique, à savoir des irrégularités à l'intérieur de la couche de copolymère d'éthylène-alcool vinylique (EVOH) ou d'éthylène-acétate de vinyle (EVA) en raison de la vue, à l'aide d'algorithmes de traitement d'image d'un logiciel de reconnaissance d'image, et dans lequel
un module de triage (8) trie automatiquement les objets (5) défectueux.

9. Dispositif selon la revendication 8, **caractérisé en ce que** le premier matériau de la couche de base (5a) et le deuxième matériau de la couche de barrière de gaz (5b) sont sélectionnés de manière à donner une vue différente dans la plage de la lumière invisible.

10. Dispositif selon l'une des revendications 8 à 9, **caractérisé en ce qu'**il comprend un module de triage (8) à l'aide duquel des objets (5) défectueux sont triés en raison d'un signal du module de traitement (7).

11. Dispositif selon l'une des revendications 8 à 10, **caractérisé en ce qu'**il comprend un élément d'irradiation (9) à l'aide duquel les objets (5) sont irradiés par le rayonnement infrarouge (St).

12. Dispositif selon l'une des revendications 8 à 11, **caractérisé en ce qu'**il comprend un élément chauffant (10) à l'aide duquel les objets (5) sont chauffés de manière à ce qu'ils développent un rayonnement propre dans la plage des infrarouges.
